# EUROPÄISCHE PATENTSCHRIFT

(11) **EP 1 712 117 B1**
(45) Veröffentlichungstag und Bekanntmachung des Hinweises auf die Patenterteilung: **05.03.2008**
(21) Anmeldenummer: 06006468.0
(22) Anmeldetag: 29.03.2006
(51) Int. Cl.: A01C 15/00

(54) **Landwirtschaftliche Verteilmaschine**
Agricultural spreader
Epandeur agricole

(30) Priorität: 16.04.2005 DE 102005017603
(43) Veröffentlichungstag der Anmeldung: 18.10.2006
(73) Patentinhaber: Amazonen-Werke H. Dreyer GmbH & Co. KG, 49205 Hasbergen (DE)
(72) Erfinder: Baye, Dietrich, 49492 Westerkappeln (DE); Walter, Achim, 49078 Osnabrück (DE)

(56) Entgegenhaltungen:
- EP-A- 0 650 661
- EP-A- 0 682 857
- EP-A- 0 982 190

## Beschreibung

Die Erfindung betrifft eine landwirtschaftliche Verteilmaschine gemäß des Oberbegriffes des Patentanspruches 1. Eine Verteilmashine mit diesen Merkmalen ist aus der EP-A-0650661 bekannt.

Der Vorratsbehälter derartiger Verteilmaschinen besteht vielfach aus mehreren aneinander anschließenden Behälterelementen, um so mehr verschieden große Behälter für entsprechende Baugrößen der Verteilmaschinen zu erhalten. Zwischen den einzelnen Behälterelementen sind Dicht- und/oder Ausgleichsleisten angeordnet, um eine ausreichende Dichtigkeit der Behälterelemente zueinander zu erreichen.

Derartige Verteilmaschinen müssen, wenn sie auf öffentlichen Straßen und Wegen bewegt werden mit einer Beleuchtungseinrichtung ausgestattet werden. Diese Beleuchtungseinrichtungen weisen stromführende Leitungen auf. Diese stromführenden Leitungen werden mittels Klemmen, Befestigungsbändern etc. an der Verteilmaschine in mühevoller Weise verlegt und befestigt. Das Verlegen der Leitungen ist kostenaufwendig und andererseits sind die Leitungen dadurch in vielen Fällen nicht vor Beschädigungen geschützt und andererseits auch nicht immer ausreichend dicht an dem Behälter oder den Rahmenelementen angeordnet. Auch müssen derartige stromführende Leitungen zu Stellorganen, Überwachungselementen, etc. der Verteilmaschine verlegt werden.

In der EP 09 82 190 A1 ist vorgeschlagen worden, stromführenden Leitungen in an einer Verteilmaschine angebrachten Schutzbügeln zu verlegen.

Der Erfindung liegt die Aufgabe zugrunde, in einfacher Weise stromführende Leitungen zu verlegen.

Diese Aufgabe wird erfindungsgemäß dadurch gelöst, dass zumindest ein Teil der Leisten stromführende Leitungen aufweisen. Infolge dieser Maßnahmen wird gleichzeitig mit dem Verlegen der Dicht- oder Ausgleichsleitungen die stromführende Leitung mit verlegt. Somit werden also zwei Arbeitsgänge zusammengefasst. Darüber hinaus sind die stromführenden Leitungen geschützt und sauber verlegt.

In einer Ausführungsform ist vorgesehen, dass die Leisten einen sich in Längsrichtung der Leisten erstreckenden Hohlraum aufweisen, dass in diesem Hohlraum die Leitungen angeordnet sind. Bei dieser Ausführungsform werden die stromführenden Leitungen vor dem Verlegen der Leisten in den Hohlraum eingeschoben. Dies kann in einem Vormontagegang geschehen.

In einer anderen Ausführungsform ist vorgesehen, dass die Leisten eine sich in Längsrichtung der Leisten erstreckende schlitzförmige Öffnung aufweisen, dass in der schlitzförmigen Öffnung die Leitungen angeordnet sind. Infolge dieser Maßnahmen können die stromführenden Leistungen ebenfalls in einem Vormontagegang in die schlitzförmigen Öffnungen angeordnet werden, so dass die Leitungen mit den stromführenden Leitungen gemeinsam verlegt werden.

In einer weiteren Ausgestaltung der Erfindung ist vorgesehen, dass die Leitungen in den Leisten in integrierter Weise angeordnet sind. Infolge dieser Maßnahme werden die Leisten bereits mit den stromführenden Leitungen hergestellt, so dass die Leitungen quasi die Leisten mit einer entsprechenden Umhüllung bilden.

Wenn die einander anschließenden Behälterelemente dicht aufeinander aufliegen müssen, ist vorgesehen, dass die Leitungen in Längsrichtung seitlich des eigentlichen Dicht- und/oder Ausgleichsbereichs angeordnet sind. Infolge dieser Maßnahme befinden sich die stromführenden Leitungen außerhalb des Dicht- und Ausgleichsbereiches, so dass die Dicht- und Ausgleichsleiste sehr dünn ausgeführt werden kann. Um die stromführenden Leitung geschützt vor Beschädigungen an der Verteilmaschine anordnen zu können, ist vorgesehen, dass die Leitungen im Dicht- und/oder Ausgleichsbereich der Leisten angeordnet sind.

Um einen vorteilhaften Anschluss der stromführenden Leitung an die Dicht- und Ausgleichsleisten zu gewährleisten, ist vorgesehen, dass in dem Bereich, in dem die Leitungen in die Leisten eingeführt und/oder aus den Leisten herausgeführt sind, Anschluss- und Dichtungstüllen angeordnet sind.

Um die stromführenden Leitungen innerhalb der Dicht- und Ausgleichsleisten mit den zu den Beleuchtungs- oder Stelleinrichtungen oder Überwachungseinrichtungen etc. weiterführenden Leitungen in einfacher Weise anschließen zu können, ist vorgesehen, dass in den Anschluss- und Dichtungstüllen Anschlussstecker angeordnet sind.

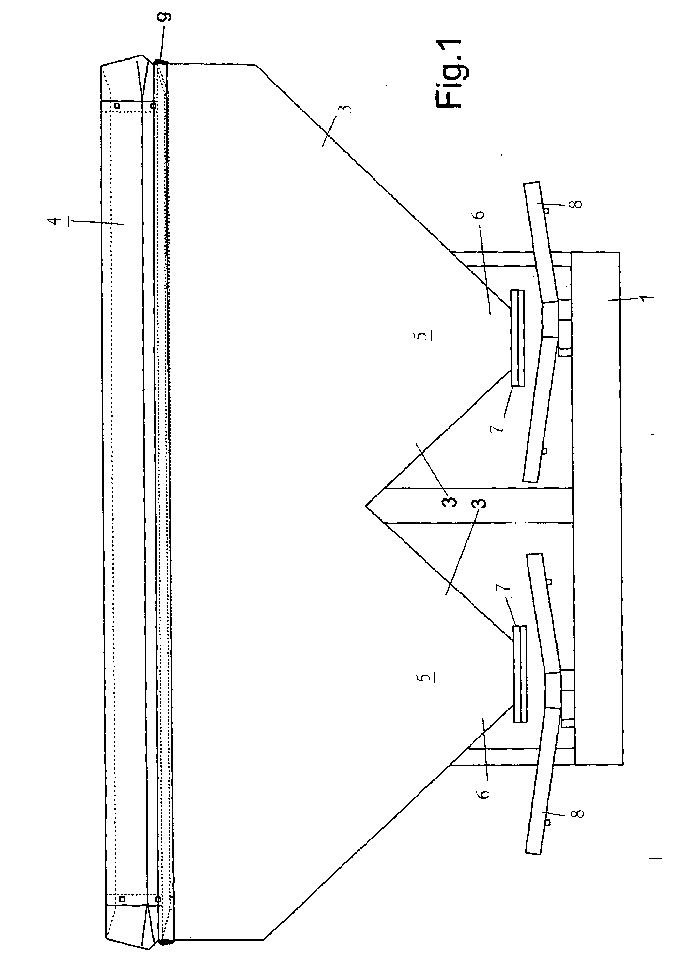

Weitere Einzelheiten der Erfindung sind den übrigen Unteransprüchen, der Beispielsbeschreibung und den Zeichnungen zu entnehmen. Hierbei zeigen
- Fig. 1: eine als Düngerstreuer ausgebildete Verteilmaschine mit den aus einem Aufsatzbehälter und Grundbehälter bestehenden Behälterelementen zusammengesetzten Vorratsbehälter in der Ansicht von hinten,
- Fig. 2: eine erste Dicht- und Ausgleichsleiste mit stromführenden Leitungen im Schnitt,
- Fig. 3: die Dicht- und Ausgleichsleiste nach Fig. 2 in perspektivischer Darstellung,
- Fig. 4: eine weitere Dicht- und Ausgleichsleiste mit stromführenden Leitungen im Schnitt,
- Fig. 5: die Dicht- und Ausgleichsleiste nach Fig. 4 in perspektivischer Darstellung,
- Fig. 6: eine weitere Dicht- und Ausgleichsleiste mit stromführenden Leitungen im Schnitt und
- Fig. 7: die Dicht- und Ausgleichsleiste nach Fig. 6 in perspektivischer Darstellung.

Die Verteilmaschine ist als Schleuderdüngerstreuer ausgebildet und weist den Rahmen 1 auf, an welchem der Vorratsbehälter 2 befestigt ist. Der Vorratsbehälter 2 ist aus dem aus Grundbehälter 3 und Aufsatzelement 4 bestehenden Behälterelementen zusammengesetzt. Der Grundbehälter 3 ist durch das dachförmige Mittelteil derart unterteilt, dass die beiden trichterförmigen Behälterteile 5 entstehen. In dem jeweiligen unteren Bereich 6 dieser trichterförmigen Behälterteile sind die Dosiereinheiten 7 angeordnet, über welche das sich im Vorratsbehälter 2 befindliche Material unterhalb der Dosiereinheiten 7 angeordneten Schleuderscheiben 8 zugeführt wird. Die Schleuderscheiben 8 werden in bekannter und daher nicht näher dargestellter Weise mittels eines Antriebes, beispielsweise über eine Gelenkwelle oder mittels hydraulischer Antriebsmotoren angetrieben.

Um das Fassungsvermögen des Grundbehälters 3 zu vergrößern lässt sich auf der Grundbehälteroberseite das Aufsatzelement 4 anordnen.

Zwischen dem Grundbehälter 3 und dem Aufsatzelement 4 ist die Ausgleichs- und/oder Dichtleiste 9 angeordnet. In dieser Leiste 9 ist die stromführende Leitung 10 in integrierter Weise angeordnet.

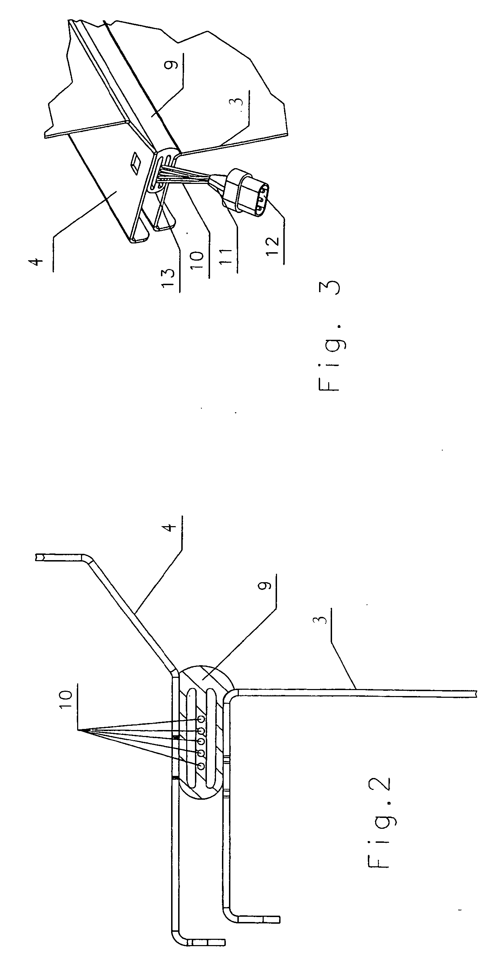

Die Montage der Ausgleichs- und/oder Dichtleiste 9 mit der stromführenden Leistung 10 gemäß den Fig. 2 und 3 zwischen den Behälterelementen 3 und 4 erfolgt folgendermaßen:

Zunächst wird die Leiste 9 und die stromführende Leitung 10 auf Länge geschnitten und an den entsprechenden Stellen eingeschnitten oder ausgekerbt. Weiterhin werden die Anschlusstüllen 11 mit dem Stecker 12 auf die Leitungsenden der Leitung 10 aufgeschoben und die beispielsweise als Stecker 12 ausgebildeten Leitungsverbindungsmittel auf den Leitungen aufgebracht. Zusätzlich wird in nicht dargestellter Weise zwischen dem Ende der Leiste 9 bzw. dem Austrittsbereich 13 der Leitungen 10 aus der Leiste 9 und der Anschlusstülle 11 bzw. dem Stecker 12 eine nicht dargestellte Abdecktülle, die beispielsweise aus einem schrumpffähigen Material besteht, zum Schutz der Leitungen 10 angebracht. Anschließend wird die Leitung auf die Oberseite des Grundbehälters 3 oder Behälterelementes aufgelegt. Zusätzlich kann die Leiste 9 mittels Klebemittel, welches sich zwischen dem Behälter 3 und der Unterseite der Ausgleichsleiste befindet, fixiert werden. Hierzu kann ein Klebemittel oder Klebestreifen benutzt werden. Anschließend wird das Aufsatzelement 4, auf Leiste 9 aufgesetzt und mittels der den Behälter 3 und das Aufsatzelement 4 durchgreifender Befestigungsmittel, wie beispielsweise Schrauben befestigt, so dass ein sicherer und fester Sitz des Aufsatzelementes 4 auf dem Behälter 3 gewährleistet ist.

Der Stecker 12 wird mit weiteren Leitungen, die zu Stellelementen, Beleuchtungseinrichtungen etc. führen verbunden. Somit sind also die stromführenden Leitungen 10sicher an dem Vorratsbehälter der Maschine angeordnet und gut verlegt angeordnet.

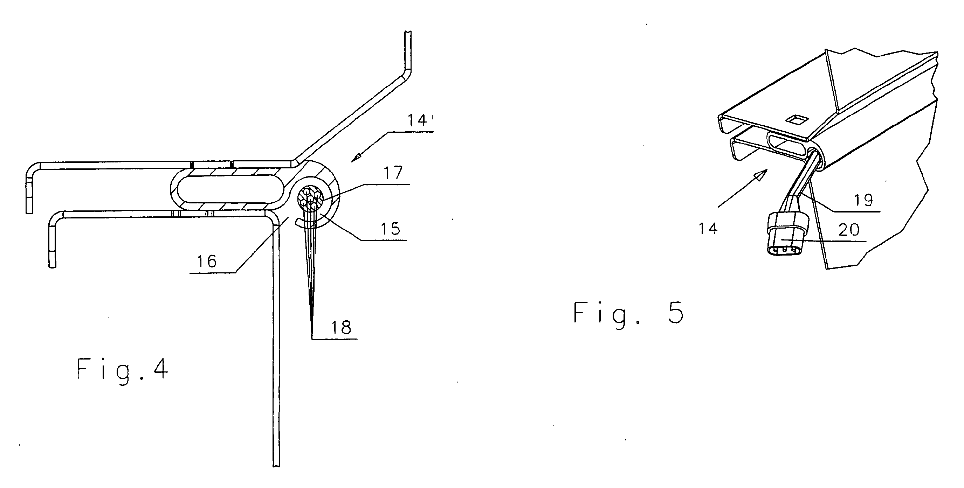

Die Dicht- und Ausgleichsleiste 14 gemäß Fig. 4 und 5 weist eine seitlich an der Leiste 14 sich in Längsrichtung der Leiste 14 erstreckenden Hohlraum 15 mit einer schlitzförmigen Öffnung 16 auf. In diesem Hohlraum 15 ist die als Kabel 17 ausgebildete Leitung mit den stromführenden Leitungen 18 angeordnet. Auf den Enden der Leitungen 18 des Kabels 17 ist die Anschlusstülle 19 mit dem Stecker 20 angeordnet. Das Kabel 17 mit den stromführenden Leitungen 18 und dem Stecker 20 lässt sich schon vorab durch die schlitzförmige Öffnung 16 in den Hohlraum 15 vor der Montage der Leiste zwischen den Behälterelementen 2, 8 vormontieren. Die Montage der Dichtleiste 14 zwischen den Behälterelementen 2, 8 erfolgt wie zu den Fig. 2 und 3 beschrieben.

Der Stecker 20 wird mit weiteren Leitungen, die zu Stellelementen, Beleuchtungseinrichtungen etc. führen verbunden. Somit sind also die stromführenden Leitungen 19 sicher an dem Vorratsbehälter der Maschine angeordnet und gut verlegt angeordnet.

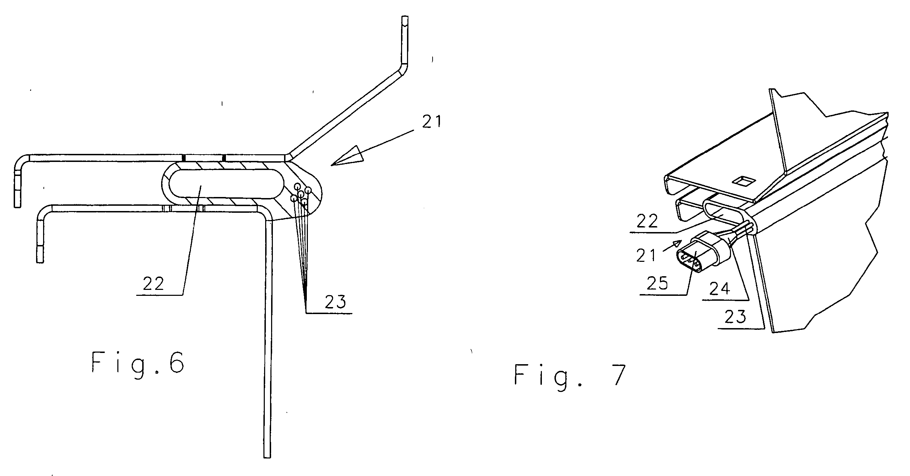

Die Dichtleiste 21 gemäß den Fig. 6 und 7 weist den Ausgleichshohlraum 22 auf. Seitlich des Hohlraumes 22 sind sich in Längsrichtung der Leiste 21 erstreckend die stromführenden 23 Leitungen in integrierter Weise in der Dichtleiste 21 angeordnet. Auf den Enden der stromführenden Leitungen 23, die aus dem Ende der Dichtleiste 21 herausgeführt sind, ist die Anschlusstülle 24 mit dem Stecker 25 angeordnet. Die Kabelenden zwischen dem Ende der Leiste 21 und der Anschlusstülle bzw. dem Stecker 25 können mit einer nicht dargestellten Abdecktülle zum Schutz der Leitungen 23 abgedeckt sein.

Der Stecker 25 wird mit weiteren Leitungen, die zu Stellelementen, Beleuchtungseinrichtungen etc. führen verbunden. Somit sind also die stromführenden Leitungen 23 sicher an dem Vorratsbehälter der Maschine angeordnet und gut verlegt angeordnet.

## Patentansprüche

1. Landwirtschaftliche Verteilmaschine mit einem Rahmen (1) und einem aus einer aneinander anschließenden Behälterelementen (3,4,5) zusammengesetzten Vorratsbehälter (2), wobei zwischen den Behälterelementen (3,4,5) Dicht- und/oder Ausgleichsleisten (9,14,21) angeordnet sind, **dadurch gekennzeichnet, dass** zumindest ein Teil der Leisten (9,14,21) stromführende Leitungen (10,19,23) aufweisen.

2. Verteilmaschine nach Anspruch 1, **dadurch gekennzeichnet, dass** die Leisten (9,14,21) einen sich in Längsrichtung der Leisten (9,14,21) erstreckenden Hohlraum (15) aufweisen, dass in diesem Hohlraum (15) die Leitungen (10,18,23) angeordnet sind.

3. Verteilmaschine nach Anspruch 1, **dadurch gekennzeichnet, dass** die Leisten (14) eine sich in Längsrichtung der Leisten (14) erstreckenden Hohlraum (15) mit einer schlitzförmigen Öffnung 16 aufweisen, dass in dem Holraum (15) die Leitungen (17,18)angeordnet sind.

4. Verteilmaschine nach Anspruch 1, **dadurch gekennzeichnet, dass** die Leitungen (10,23) in den Leisten (9,21) in integrierter Weise angeordnet sind.

5. Verteilmaschine nach Anspruch 1, **dadurch gekennzeichnet, dass** die Leitungen (23) in Längsrichtung seitlich des eigentlichen Dicht- und/oder Ausgleichsbereichs angeordnet sind.

6. Verteilmaschine nach Anspruch 1, **dadurch gekennzeichnet, dass** die Leitungen (10) im Dicht- und/oder Ausgleichsbereich der Leisten (9)angeordnet sind.

7. Verteilmaschine nach einem oder mehreren der vorstehenden Ansprüche, **dadurch gekennzeichnet, dass** in dem Bereich, in dem die Leitungen (10,18,23) in die Leisten (9,14,21) eingeführt und/oder aus den Leisten (9,14,21) herausgeführt sind, Anschluss- und Dichtungstüllen (11,19,24) angeordnet sind.

8. Verteilmaschine nach Anspruch 7, **dadurch gekennzeichnet, dass** in den Anschluss- und Dichtungstüllen (11,19,24) Anschlussstecker (12,20,25) angeordnet sind.

9. Verteilmaschine nach einem oder mehreren der vorstehenden Ansprüche, **dadurch gekennzeichnet, dass** die Leisten (9,14,21) aus einem elastischen Kunststoffmaterial bestehen.

## Claims

1. Agricultural distributor including a frame (1) and a hopper (2), which is composed of container elements (3, 4, 5) that are connected to one another, wherein sealing strips and/or compensating strips (9, 14, 21) are disposed between the container elements (3, 4, 5), **characterised in that** at least one part of the strips (9, 14, 21) includes current-carrying lines (10, 19, 23).

2. Distributor according to claim 1, **characterised in that** the strips (9, 14, 21) include a hollow space (15) that extends in the longitudinal direction of the strips (9, 14, 21), and **in that** the lines (10, 18, 23) are disposed in the said hollow space (15).

3. Distributor according to claim 1, **characterised in that** the strips (14) include a hollow space (15) that extends in the longitudinal direction of the strips (14) with a slot-shaped opening 16, and **in that** the lines (17, 18) are disposed in the hollow space (15).

4. Distributor according to claim 1, **characterised in that** the lines (10, 23) are disposed in the strips (9, 21) in an incorporated manner.

5. Distributor according to claim 1, **characterised in that** the lines (23) are disposed in the longitudinal direction laterally of the actual sealing and/or compensating region.

6. Distributor according to claim 1, **characterised in that** the lines (10) are disposed in the sealing and/or compensating region of the strips (9).

7. Distributor according to one or more of the preceding claims, **characterised in that** connecting and sealing sockets (11, 19, 24) are disposed in the region in which the lines (10, 18, 23) are introduced into the strips (9, 14, 21) and/or are guided out of the strips (9, 14, 21).

8. Distributor according to claim 7, **characterised in that** connecting plugs (12, 20, 25) are disposed in the connecting and sealing sockets (11, 19,24).

9. Distributor according to one or more of the preceding claims, **characterised in that** the strips (9, 14, 21) are produced from a resilient plastics material.

## Revendications

1. Epandeur agricole comportant un châssis (1) et un réservoir (2) formé par l'assemblage d'éléments de réservoir (3, 4) adjacents, et entre les éléments de réservoir (3, 4, 5) il y a des longerons d'étanchéité et/ ou de compensation (9, 14, 21),
**caractérisé en ce qu'**
au moins une partie des longerons (9, 14, 21) comporte des lignes électriques (10, 19, 23).

2. Epandeur selon la revendication 1,
**caractérisé en ce que**
les longerons (9, 14, 21) ont une cavité (15) s'étendant dans la direction longitudinale des longerons (9, 14, 21) et les lignes électriques (10, 18, 23) sont placées dans cette cavité (15).

3. Epandeur selon la revendication 1,
**caractérisé en ce que**
les longerons (14) ont une cavité (15) s'étendant dans la direction longitudinale des longerons (14) avec une ouverture (16) en forme de fente et les lignes électriques (17, 18) sont placées dans la cavité (15).

4. Epandeur selon la revendication 1,
**caractérisé en ce que**
les lignes (10, 23) sont intégrées dans les longerons (9, 21).

5. Epandeur selon la revendication 1,
**caractérisé en ce que**
les lignes (23) sont installées dans la direction longitudinale à côté de la zone d'étanchéité et/ ou de compensation proprement dite.

6. Epandeur selon la revendication 1,
**caractérisé en ce que**
les lignes (10) sont installées dans la zone d'étanchéité et/ou de compensation des longerons (9).

7. Epandeur selon l'une ou plusieurs des revendications précédentes,
**caractérisé en ce que**
dans la zone dans laquelle les lignes électriques (10, 18, 23) entrent et/ou sortent des longerons (9, 14, 21) il y a des manchons de branchement et d'étanchéité (11, 19, 24).

8. Epandeur selon la revendication 7,
**caractérisé par**
des connecteurs (12, 20, 25) dans les manchons de raccordement et d'étanchéité (11, 19, 24).

9. Epandeur selon l'une ou plusieurs des revendications précédentes,
**caractérisé en ce que**
les longerons (9, 14, 21) sont en une matière plastique élastique.
